# EUROPÄISCHE PATENTANMELDUNG

(11) **EP 3 082 054 A1**
(43) Veröffentlichungstag der Anmeldung: **19.10.2016**
(21) Anmeldenummer: 15163523.2
(22) Anmeldetag: 14.04.2015
(51) Int. Cl.: G06F 17/50

(54) **DATENVERARBEITUNGSEINRICHTUNG UND VERFAHREN ZUR UNTERSTÜTZUNG EINES ANWENDERS BEI EINER PRODUKTDEFINITION**

(71) Anmelder: h&z Unternehmensberatung AG, 80331 München (DE)
(72) Erfinder: Haas, Otto Christian, 81827 München (DE)
(74) Vertreter: Hoefer & Partner Patentanwälte mbB

(57) **Zusammenfassung**

Es werden eine Datenverarbeitungseinrichtung (1) und ein Verfahren zur Unterstützung eines Anwenders bei einer Produktdefinition mittels einer Datenverarbeitungseinrichtung (1) vorgeschlagen. Das Verfahren umfasst die Schritte: Empfangen einer Anwendereingabe eines Anwenders konkretisierend ein Merkmal (M1, M2, M3) eines Werkstückes (2), Senden einer das Merkmal (M1, M2, M3) repräsentierenden Nachricht (3) an eine Datenbank (4, 5), automatisches Auswählen mindestens eines Eintrages aus der Datenbank (4, 5) anhand des Merkmals (M1, M2, M3), und Ausgeben eines Informationen aus dem Eintrag repräsentierenden Hinweises (6) bezüglich des Merkmals (M1, M2, M3) an den Anwender.

## Beschreibung

### Stand der Technik

Die vorliegende Erfindung betrifft eine Datenverarbeitungseinrichtung sowie ein Verfahren zur Unterstützung eines Anwenders bei einer Produktdefinition mittels einer Datenverarbeitungseinrichtung. Insbesondere betrifft die vorliegende Erfindung Möglichkeiten zur raschen Definition von Produkten, eine verbesserte Informationslage bei der Produktdefinition und eine automatische Berücksichtigung konstruktiver Alternativen.

Im Stand der Technik sind Zeichenprogramme (computerunterstütztes Zeichnen, computer aided design, CAD) bekannt, mittels welcher Konstrukteure neue Werkstücke entwerfen können. Bekannt ist überdies die Einbindung von Datenbanken derart, dass Komponenten durch Auswahl aus der Datenbank dem Werkstück hinzugefügt werden können. Dies erfolgt üblicherweise derart, dass der Anwender die Datenbank nach einer geeigneten Komponente (z.B. eine Schraube) durchsucht, gegebenenfalls ein passendes Element auswählt und es auf diese Weise dem Werkstück hinzufügt. Anschließend muss der Anwender die tatsächliche Eignung der Komponente zur Verwendung im Werkstück selbständig überprüfen. Auch Alternativen aus der Datenbank hat der Anwender selbsttätig in Betracht zu ziehen und zu überprüfen. Schließlich wählt der Anwender die am besten geeignete Komponente aus der Datenbank aus oder entwirft selbst eine Komponente, was mit zusätzlichen Kosten für die Konstruktion, Erprobung und Fertigung verbunden ist.

Es ist eine Aufgabe der vorliegenden Erfindung, einen Anwender bei einer Produktdefinition mittels einer Datenverarbeitungseinrichtung bestmöglich zu unterstützen.

### Offenbarung der Erfindung

Die vorstehend identifizierte Aufgabe wird erfindungsgemäß durch ein Verfahren zur Unterstützung eines Anwenders bei einer Produktdefinition mittels einer Datenverarbeitungseinrichtung gelöst. Der Anwender kann beispielsweise ein Konstrukteur oder ein Produktdesigner sein, der eine elektronische Datenverarbeitungseinrichtung bedient. In der Datenverarbeitungseinrichtung entwirft der Anwender ein Produkt, welches während des Entstehungsprozesses im Rahmen der vorliegenden Erfindung als "Werkstück" bezeichnet wird. Das Werkstück weist Eigenschaften auf und kann eigenständige Komponenten aufweisen, welche es während der Produktdefinition festzulegen und mitunter iterativ zu konkretisieren gilt. Hierzu interagiert der Anwender über eine Anwenderschnittstelle mit der Datenverarbeitungseinrichtung, über welche er Eingaben zur Konkretisierung eines Merkmals des Werkstückes bzw. einer seiner Komponenten vornimmt. Die Anwendereingabe kann beispielsweise über eine Tastatur, ein Trackpad, eine Maus, Spracheingabe und/oder Blick- und Gestensteuerung erfolgen. Insbesondere ist erfindungsgemäß vorgesehen, dass die Anwendereingabe "direkt am Werkstück" erfolgt, also keine eigens durch den Anwender durchgeführte Auswahl aus einer Datenbank oder einer Liste durch die Anwendereingabe erfolgt. Das Werkstück kann als optische Repräsentation ("Zeichnung") auf einem Bildschirm der Datenverarbeitungseinrichtung dargestellt werden. Die Anwendereingabe kann eine Interaktion des Anwenders mit der Zeichnung darstellen. Beispielsweise kann der Anwender eine Dimension, ein Maß, eine Werkstoffeigenschaft o.Ä. des Werkstückes ändern. Anschließend wird eine das geänderte Merkmal repräsentierende Nachricht an eine Datenbank gesendet. Mit anderen Worten wird nach der erfolgten Konkretisierung ein das geänderte Merkmal repräsentierendes Datenpaket definiert und an die Datenbank gesendet. Aus der Datenbank wird mindestens ein Eintrag anhand des Merkmals automatisch ausgewählt. Der Eintrag kann beispielsweise eine Komponente repräsentieren, welche bezüglich eines Merkmals oder mehrerer Merkmale der durch die Anwendereingabe konkretisierten ("geänderten") Komponente des Werkstückes ähnlich ist. Der Eintrag bzw. dessen Merkmal kann mit dem in der Nachricht enthaltenen Merkmal übereinstimmen oder ein vordefiniertes Maß an Übereinstimmung aufweisen. Selbstverständlich können auch mehrere Einträge aus der Datenbank automatisch ausgewählt und zur Basis eines Vorschlages an den Anwender gemacht werden. Schließlich wird ein die Informationen aus dem Eintrag oder den Einträgen repräsentierender Hinweis bezüglich des Merkmals an den Anwender ausgegeben. Beispielsweise kann der Anwender darauf hingewiesen werden, welche Einträge der Datenbank mit dem konkretisierten Merkmal am besten übereinstimmen. Alternativ oder zusätzlich kann auf Basis der Einträge ein Hinweis an den Anwender ergehen, welche Umstände es bei der Verwendung des Merkmals/der Komponente im Rahmen des definierten Produktes zu berücksichtigen gilt. Beispielsweise können kundenspezifische Leistungsparameter, die Haltbarkeit, enthaltende Schadstoffe, prozesstechnische Randbedingungen o.Ä. im Hinweis enthalten sein. Die im Rahmen des erfindungsgemäßen Verfahrens verwendete Datenverarbeitungseinrichtung unterscheidet sich also von allen bestehenden Verfahren durch eine datentechnische Aufbereitung großer Datenmengen, welche bereits existierende und ähnliche Werkstücke oder Komponenten beschreiben. Diese können entweder unternehmensintern oder (z.B. anonymisiert) unternehmensfremd entworfen worden sein und beispielsweise als Lagerware angeboten werden. Auf diese Weise wird der Anwender automatisch und proaktiv über die Auswirkungen der Merkmalskonkretisierung des Werkstücks informiert. Entsprechend kann der Anwender durch die vorliegende Erfindung besonders rasch auf die zu erwartenden Auswirkungen seiner Merkmalskonkretisierung reagieren, was den Produktentstehungsprozess beschleunigt und die Merkmalskonkretisierung verbessert.

Die Unteransprüche zeigen bevorzugte Weiterbildungen der Erfindung.

Bevorzugt kann das Senden der das Merkmal repräsentierenden Nachricht an die Datenbank im Ansprechen auf das Empfangen der Anwendereingabe erfolgen. Unmittelbar nach erfolgter Konkretisierung wird also die Datenbank konsultiert, um einen Hinweis repräsentierend Informationen aus dem Eintrag an den Anwender auszugeben. Dies bietet den Vorteil, dass der Anwender keine zusätzliche Interaktion vornehmen muss, um Informationen bezüglich der Einträge in der Datenbank zu dem Merkmal zu erhalten.

Das Merkmal kann beispielsweise eine Kategorie einer Komponente für das Werkstück konkretisieren. Beispielsweise kann eine Schraube, ein Display, ein Bedienknopf, eine Dichtung, ein Scharnier o.Ä. durch die Konkretisierung des Merkmals also solcher bzw. als solche bzw. als solches definiert werden. Dies kann durch eine explizite Eingabe durch den Anwender erfolgen, mittels welcher er der Komponente die Kategorie (z.B. per Texteingabe und/oder durch ein Auswahlmenü) zuweist. Alternativ oder zusätzlich kann die Kategorie auch automatisch erkannt werden. Erhält beispielsweise ein Bolzen ein Gewinde, kann dieser automatisch als "Schraubbolzen" oder "Gewindebolzen" klassifiziert werden, diese Information in die Nachricht an die Datenbank integriert und die Datenbank nach Schraubbolzen mit ähnlichen Abmessungen und Gewindeeigenschaften durchsucht werden. Alternativ oder zusätzlich kann die Gestalt des Werkstückes konkretisiert werden, indem beispielsweise eine Kantenlänge, eine Proportion und/oder eine Position eines mechanischen Merkmals (z.B. eine Bohrung) vom Anwender neu festgelegt wird. Auch eine andere mechanische Kenngröße (z.B. Oberflächenrauigkeit, Festigkeit, Oberflächenveredelung oder -beschichtung) kann ebenso wie eine elektrische Eigenschaft der Komponente durch die Anwendereingabe spezifiziert werden. Handelt es sich bei dem Werkstück beispielsweise um ein elektronisches Anwenderendgerät, kann das Merkmal eine Spezifikationen dessen Anzeigeelementes ("Displays") definieren. Beispielsweise kann die Auflösung des Displays, die Helligkeit, die Größe und/oder eine Displaytechnologie durch die Anwendereingabe konkretisiert werden, so dass der Hinweis entsprechende Informationen auf ähnliche, bereits verfügbare Displays enthalten kann, welche der Anwender in Betracht ziehen sollte, um Entwicklungsaufwand und Herstellungskosten gering zu halten. Alternativ oder zusätzlich kann auch eine werkstofftechnische Spezifikation des Werkstückes (z.B. ein Material, eine Bearbeitungstechnologie, eine Beschichtung, eine Veredelung, eine Legierung) das Werkstück konkretisieren und zur Ausgabe von Informationen in Form des Hinweises auf ähnlich spezifizierte, verfügbare Komponenten verwendet werden.

Anhand vordefinierter Charakteristika der durch den Anwender gezeichneten Komponente kann eine Kategorie der Komponente automatisch ermittelt werden. Beispielsweise kann auf Basis der Abmessungen, einer Definition des zu verwendenden Materials und/oder einer erforderlichen Eigenschaft der Komponente automatisch erkannt werden, dass es sich um eine Komponente einer bestimmten Kategorie handelt. Die Kategorie kann beispielsweise bereits innerhalb der Datenverarbeitungseinrichtung ermittelt werden und in die Nachricht an die Datenbank geschrieben werden. Alternativ oder zusätzlich kann die Kategorie für die Komponente auch dezentral (z.B. innerhalb der Datenbank) ermittelt werden, so dass eine vergrößerte Informationsbasis zur Findung einer geeigneten Kategorie für die Komponente verwendet wird.

Der Anwender kann mittels der Datenverarbeitungseinrichtung ein Produkt der Elektrotechnik (z.B. ein elektrisches, insbesondere elektronisches Gerät, beispielsweise Drahtloskommunikationsgerät, Tablet o.Ä.) entwerfen. Alternativ oder zusätzlich kann die Produktdefinition eine mechanische Komponente definieren, welche im Bereich der Automobiltechnik, Luft-/Raumfahrt, der Energieerzeugung o.Ä. anzuordnen ist.

Die Datenverarbeitungseinrichtung kann beispielsweise unter Vermittlung des Internets und/oder eines Intranets mit der Datenbank informationstechnisch verbunden sein. Entsprechend können viele Datenbanken mit der Datenverarbeitungseinrichtung kommunizieren, wie dies oben in Verbindung mit einer einzigen Datenbank exemplarisch beschrieben ist. Entsprechend kann auch der Hinweis an den Anwender über die Informationen aus dem Eintrag eine Vielzahl von Informationen bezüglich einer Vielzahl von Einträgen aus den Datenbanken enthalten. Die Auswahl darüber, welche Informationen Eingang in den Hinweis erhalten, kann beispielsweise innerhalb der Datenverarbeitungseinrichtung definiert werden. Auf diese Weise kann bestmöglich sichergestellt werden, dass dem Anwender lediglich die Informationen mit höchster Relevanz unterbreitet werden.

Der Betreiber der Datenbank kann beispielsweise ein Hersteller und/oder ein Händler und/oder ein Abnehmer für Komponenten und Produkte sein. Alle vorgenannten Marktteilnehmer betreiben üblicherweise Produktionsstätten bzw. Teilelager, welche durch die vorliegende Erfindung informationstechnisch in die Produktdefinition eingebunden und zur Beschleunigung und Verbesserung des Produktentstehungsprozesses verwendet werden können.

Der Eintrag in der Datenbank kann beispielsweise einen vollständig spezifizierten Artikel eindeutig kennzeichnen (z.B. u.A. anhand einer Artikelnummer und/oder einer Bestellnummer), welcher ein Merkmal mit einem vordefinierten Ähnlichkeitsmaß zum in der Nachricht repräsentierten Merkmal des Werkstücks aufweist. Der Artikel kann beispielsweise zum Verkauf stehen oder zumindest "verkaufsbereit" spezifiziert sein. Entsprechend kann auch ein Verkaufspreis als Information dem Eintrag zugeordnet werden, welcher im Rahmen des Hinweises an den Anwender kommuniziert wird. Insofern kann die Datenbank einem Hersteller, einem Händler und/oder einem Spediteur zugeordnet sein und zur Verwendung durch den Anwender an die Datenverarbeitungseinrichtung angebunden sein.

Zur Sicherung der Einträge der Datenbank gegen einen unautorisierten Zugriff kann die Datenverarbeitungseinrichtung mittels einer Überprüfung eines Anwenderprofils autorisiert worden sein, die Nachricht an die Datenbank zu senden und somit Informationen bezüglich des Merkmals aus den Einträgen der Datenbank abzurufen. Eine derartige Integration der Datenbank in einen Produktdefinitionsprozess kann die Fertigung von Prototypen, Kleinserien und Großserien erheblich beschleunigen.

Zur weiteren Unterstützung des Anwenders können die Einträge der Datenbank auch Verfügbarkeit, Lieferzeiten etc. spezifizieren, welche die Eignung des einen oder des anderen Artikels zur Verwendung in dem konkretisierten Werkstück kennzeichnet. Das Merkmal des Artikels in der Datenbank kann durch ein vordefiniertes Ähnlichkeitsmaß zum in der Nachricht repräsentierten Merkmal dessen Berücksichtigung im Hinweis an den Anwender sicherstellen. Beispielsweise kann sichergestellt werden, dass bestimmte Abmessungen zu einem Mindestprozentsatz mit denjenigen des in der Nachricht definierten Werkstückes übereinstimmen. Entsprechendes gilt für andere Eigenschaften wie z.B. Temperaturfestigkeit, mechanische Festigkeit, Korrosionsbeständigkeit, Masse, Verträglichkeit mit anderen, in dem Werkstück enthaltenen Stoffen und Verbindungen, Freigaberichtlinien zur Verwendung in bestimmten Bereichen etc.

Der Hinweis kann beispielsweise technische Leistungsmerkmale umfassen, welche in der Datenbank spezifiziert werden. Auf diese Weise kann der Betreiber der Datenbank den Anwender schnellstmöglich darüber informieren, welche Randbedingungen die Verwendung des durch den Eintrag in der Datenbank repräsentierten Gegenstandes hat. Beispielsweise können dessen Masse und/oder dessen Abmessungen und/oder eine durchschnittliche Lebensdauer und/oder eine durchschnittliche Ausfallrate der Komponente über der Zeit und/oder eine Festigkeitskenngröße (mechanische Festigkeit, Temperatur-und/oder Säurebeständigkeit) und/oder ein technischer Parameter Eingang in die Informationen des Hinweises an den Anwender halten. Alternativ oder zusätzlich können Konsumentenspezifische Präferenzen, wie z.B. Farben und besondere Leistungsausprägungen, angezeigt werden.

Auch können eine Verfügbarkeit und/oder eine voraussichtliche Lieferzeit durch den Hinweis charakterisiert werden. Die beiden vorgenannten Informationen können insbesondere unter Berücksichtigung eines für das Werkstück vordefinierten Bearbeitungs- und/oder Fertigungsstandortes und/oder unter Berücksichtigung eines dem Eintrag aus der Datenbank zugeordneten Lagerortes ermittelt und ausgegeben werden, um beurteilen zu können, ob der dem Eintrag zugeordnete Artikel für die Verwendung im definierten Werkstück bzw. Produkt in Frage kommt.

Alternativ oder zusätzlich kann auch eine Gegenüberstellung zwischen dem in der Nachricht repräsentierten Merkmal des Werkstückes/der Komponente und dem Eintrag aus der Datenbank charakterisiert und insbesondere quantifiziert werden. Beispielsweise kann dem Anwender ein Hinweis bezüglich des Unterschiedes zwischen dem Eintrag und der Komponente ausgegeben werden. Bezüglich einer Masse des jeweiligen Gegenstandes kann der Hinweis also ein Mehr- oder Wenigergewicht, eine Abweichung von einer gewünschten Mindestlebensdauer oder ein Hinweis darauf gegeben werden, welche weiteren Anpassungen durch Verwendung einer durch den Eintrag in der Datenbank repräsentierten Komponente erforderlich werden könnten. Entsprechend können Gegenüberstellungen innerhalb des Hinweises zwischen der Komponente und mehreren Einträgen und/oder zwischen unterschiedlichen Einträgen aus der Datenbank oder den Datenbanken enthalten sein.

Der Eintrag der Datenbank kann beispielsweise einen Artikel einer internetbasierten Verkaufsplattform repräsentieren. Die Verkaufsplattform kann sich insbesondere an Endkunden wenden. Solche Verkaufsplattformen bieten mitunter eine immense Anzahl von Artikeln an, die bezüglich einer Vielzahl von Merkmalen datentechnisch repräsentiert werden. Diese Informationsbasis stellt für das erfindungsgemäße Verfahren ein erhebliches Potential bereit, den Anwender bei einer Produktdefinition zu unterstützen. Zudem sind kaufmännisch und logistisch konkrete Informationen für jeden Artikel abrufbereit, durch welche der Anwender bei der Produktdefinition Planungssicherheit z.B. bezüglich des Prototypenbaus erhält. Bei der Durchführung des erfindungsgemäßen Verfahrens kann eine erhebliche Anzahl von Einträgen der Datenbank berücksichtigt werden, wobei eine statistische Auswertung von solchen Einträgen angestellt werden kann, welche dem Werkstück oder einer durch den Anwender konkretisierten Komponente des Werkstücks ähnlich sind. Insbesondere können einzelne Merkmale des Werkstücks aus den statistischen Untersuchungen herausgelöst und charakterisiert werden. Dies wird nachfolgend anhand eines Beispiels kurz erläutert:
Definiert der Anwender ein Modul zur Datenübertragung mittels Bluetooth für ein Drahtloskommunikationsgerät, kann ohne eine konkrete Kenntnis vom Aufbau eines Bluetooth Moduls eine Vielzahl von in der Verkaufsplattform angebotenen Drahtloskommunikationsgeräten mit einem solchen Modul den Eigenschaften entsprechender angebotener Produkte ohne ein solches Modul gegenübergestellt werden. Auf diese Weise lässt sich rasch und zuverlässig ermitteln, inwiefern ein Bluetooth Modul Auswirkungen auf Abmessungen, Masse, Akkulaufzeit und Preis und die Absatzmöglichkeiten eines Drahtloskommunikationsgerätes hat. Diese Verfahrensweise lässt sich auf eine Vielzahl möglicher Ausstattungsmerkmale für Produkte übertragen, welche in ähnlicher Form bereits elektronisch spezifiziert und insbesondere im Internet als Bestandteil von Produkten zum Verkauf angeboten werden.

Basierend auf dem Eintrag aus der Datenbank bzw. basierend auf einem Ähnlichkeitsmaß zum in der Nachricht repräsentierten Merkmal kann der Anwender anschließend aufgefordert werden zu entscheiden, ob ein Merkmal des Eintrages für das Werkstück tatsächlich verwendet werden soll oder gar sämtliche Merkmale des Eintrages für das Werkstück verwendet werden sollen bzw. der derart definierte Artikel für das Werkstück verwendet werden soll. Hierzu kann der Hinweis eine Abfrage und insbesondere Schaltflächen aufweisen, welche einen jeweiligen Eintrag bzw. ein jeweiliges Merkmal als geeignet klassifizierter Einträge repräsentieren. Betätigt der Anwender eine jeweilige Schaltfläche, wird das konkretisierte Merkmal seines Werkstückes entsprechend dem Eintrag definiert. Zusätzlich können weitere Merkmale des Werkstückes entsprechend dem ausgewählten Eintrag angepasst werden. Dies ermöglicht eine komfortable Unterstützung eines Anwenders bei einer modularen Produktdefinition. Mit anderen Worten wird der Anwender darauf hingewiesen, welche gegebenenfalls verwendbaren Komponenten für sein Werkstück bereits verfügbar sind. Dies beschleunigt die Produktdefinition, senkt die Kosten und verringert den Erprobungsaufwand, da auf vorhandene Produkte und Erprobungsergebnisse zurückgegriffen werden kann.

Gemäß einem zweiten Aspekt der vorliegenden Erfindung wird eine Datenverarbeitungseinrichtung zur Unterstützung eines Anwenders bei einer Produktdefinition vorgeschlagen. Diese umfasst eine Anwenderschnittstelle, welche eingerichtet ist, eine Anwendereingabe eines Anwenders konkretisierend ein Merkmal eines Werkstückes, aus welchem das zu definierende Produkt entstehen soll, zu empfangen. Die Anwenderschnittstelle kann beispielsweise eine taktile Eingabe, eine akustische Eingabe, eine sensorische Eingabe o.Ä. unterstützen. Eine Sendeempfangseinrichtung ist eingerichtet, eine das Merkmal repräsentierende Nachricht zu definieren und an eine Datenbank zu senden. Die Sendeempfangseinrichtung kann eine leitungsvermittelte und/oder eine drahtlose Datenübertragung unterstützen. Zusätzlich ist die Sendeempfangseinrichtung eingerichtet, eine Nachricht repräsentierend einen automatisch anhand des Merkmals ausgewählten Eintrag aus der Datenbank zu empfangen. Auf diese Weise ist die Datenverarbeitungseinrichtung in der Lage, die von der Datenbank bereitgestellten Informationen dem durch die Anwendereingabe modifizierten Merkmal zuzuordnen. Eine Ausgabeeinheit, welche beispielsweise Bestandteil der Anwenderschnittstelle sein kann, ist eingerichtet, einen Informationen aus dem Eintrag repräsentierenden Hinweis bezüglich des Merkmals an den Anwender auszugeben. Üblicherweise wird als Ausgabeeinheit ein Bildschirm oder eine andere visuelle Anzeigeeinrichtung vorgesehen sein. Diese kann ergänzt werden um akustische und/oder haptische Ausgabemöglichkeiten. Die derart ausgestaltete Datenverarbeitungseinrichtung ist also eingerichtet, in Verbindung mit der Datenbank bzw. mit mehreren Datenbanken ein Verfahren auszuführen, wie es in Verbindung mit dem erstgenannten Erfindungsaspekt im Detail beschrieben worden ist. Insofern wird bezüglich der Merkmale, Merkmalskombinationen und der sich aus diesen ergebenden Vorteile zur Vermeidung von Wiederholungen auf die diesbezüglichen Ausführungen verwiesen.

Beispiele für Merkmale, welche der Anwender für das Werkstück konkretisieren kann, sind bei einem Drahtlosanwenderendgerät (z.B. "Table", "Mobiltelefon", "Notebook") z.B. die Displaygröße und dessen Auflösung, der verfügbare interne Speicher, mögliche Speichererweiterungen ("Speicherkartenslots"), Anzahl der Kameras und Auflösung der Kameras, Masse, Akkukapazität, Akkulaufzeit, Anzahl der vom Touchscreen auflösbaren Berührpunkte, das Betriebssystem, Anzahl der beherrschten Funkstandards (Tri-Band, Quad-Band etc.), beherrschte Datenkommunikationsstandards (Bluetooth, WLAN), Kompatibilität mit Peripheriegeräten und viele andere technische Eigenschaften. Da die Hersteller umfassende Datenlisten der vorgenannten Eigenschaften veröffentlichen und für Testinstitutionen, Onlinehändler und Netzbetreiber zur Verfügung stellen, kann eine entsprechende Datenbank zur Verwendung im Rahmen eines erfindungsgemäßen Verfahrens eine Unterstützung des Anwenders bei der Produktdefinition entsprechend der oben angeführten Ausgestaltungen unterstützen. Das erfindungsgemäß zu definierende Produkt kann beispielsweise sog. Weiße Ware (Hausarbeit wie Kochen, Waschen), Braune Ware (Unterhaltungselektronik), Rote Ware (Heizungen) oder Graue Ware (IT, EDV) sein. Allerdings muss es sich nicht notwendigerweise um ein Endkundenprodukt handeln.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Skizze zur Veranschaulichung des erfindungsgemäßen Verfahrens anhand eines Ausführungsbeispiels einer erfindungsgemäßen Datenverarbeitungseinrichtung; und
- Figur 2: ein Flussdiagramm veranschaulichend Schritte eines Ausführungsbeispiels eines erfindungsgemäßen Verfahrens zur Unterstützung eines Anwenders bei einer Produktdefinition.

### Ausführungsformen der Erfindung

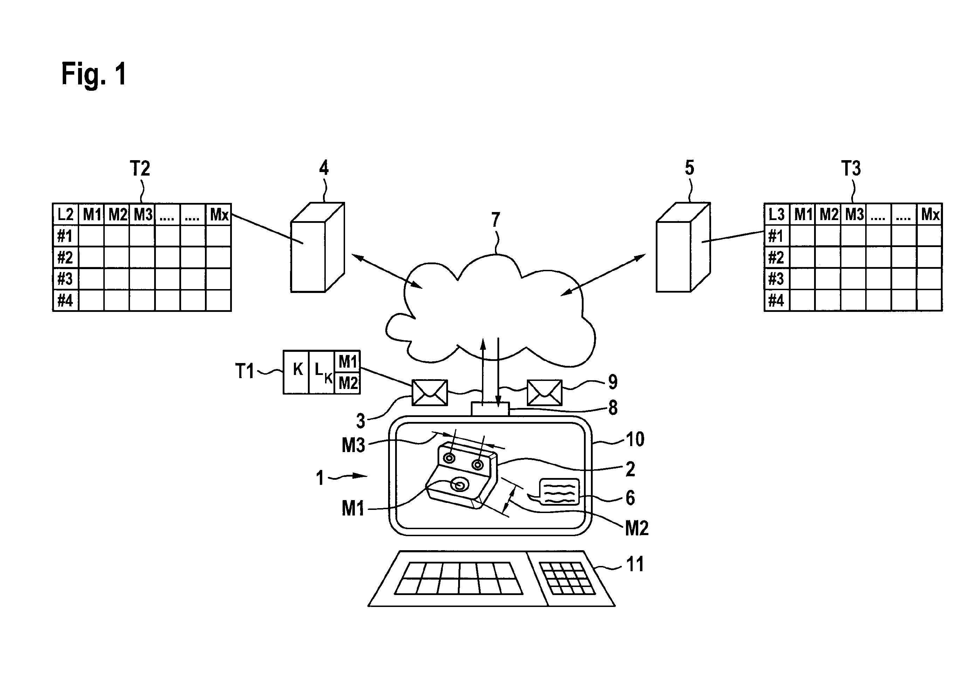

Figur 1 zeigt einen CAD-Rechner 1 als Datenverarbeitungseinrichtung, welcher einen Bildschirm 10 als Ausgabeeinheit einer Anwenderschnittstelle aufweist, die zudem über eine Tastatur 11 verfügt. Auf dem Bildschirm 10 definiert der Anwender einen metallischen Winkel 2 als Werkstück, welcher über Bohrungen als Merkmale M1 verfügt, welche vom Anwender konkretisiert werden können. Weitere Merkmale M2, M3 sind der Abstand zweier Bohrungen in einem vertikalen Teil des Winkels 2 und die Tiefe des Winkels 2. Im Ansprechen auf die Definition der Merkmale M1, M2 definiert der CAD-Rechner 1 eine Nachricht 3, welche über eine Sendeempfangseinheit 8 an das Internet 7 gesendet wird. Die Nachricht 3 enthält eine Tabelle T1, welche eine Kategorie K ("metallischer Winkel"), eine Ortsinformation L_{K} zur Kennzeichnung des Konstruktionsortes und die Merkmale M1 und M2 spezifiziert. Über das Internet 7 wird die Nachricht 3 an zwei Datenserver 4, 5 versendet, in welchen Tabellen T2 bzw. T3 gespeichert sind. Die Tabellen T2, T3 weisen Ortsinformationen L2, L3 auf, über welche Informationen bezüglich der Lagerorte von durch Einträge #1 bis #4 repräsentierten Artikeln gekennzeichnet werden. Die Artikel #1 bis #4 weisen ihrerseits Merkmale M1, M2, M3, M_{X} auf. Anhand der Tabelle T1 in der Nachricht 3 werden diejenigen Einträge #1 bis #4 aus den Tabellen T2, T3 ermittelt, welche ein jeweiliges Höchstmaß an Übereinstimmungen bezüglich der Merkmale M1, M2 aus der Tabelle T1 aufweisen. Entsprechend senden die Datenbanken 4, 5 Nachrichten 9 an den CAD-Rechner 1, in welchen sämtliche Merkmale der ausgewählten Einträge #1 bis #4 enthalten sind. Die für den Anwender relevanten Informationen in den Nachrichten 9 werden von dem CAD-Rechner 1 extrahiert und in Form eines Hinweises 6 auf dem Bildschirm 10 angezeigt. Auf diese Weise erhält der Anwender beispielsweise Informationen darüber, dass identisch aufgebaute Winkel 2 mit geringfügig anders ausgeführten Bohrungen bereits über einen Anbieter am Ort L2 innerhalb einer Woche bezogen und an den Ort L*_{K}* geliefert werden könnten.

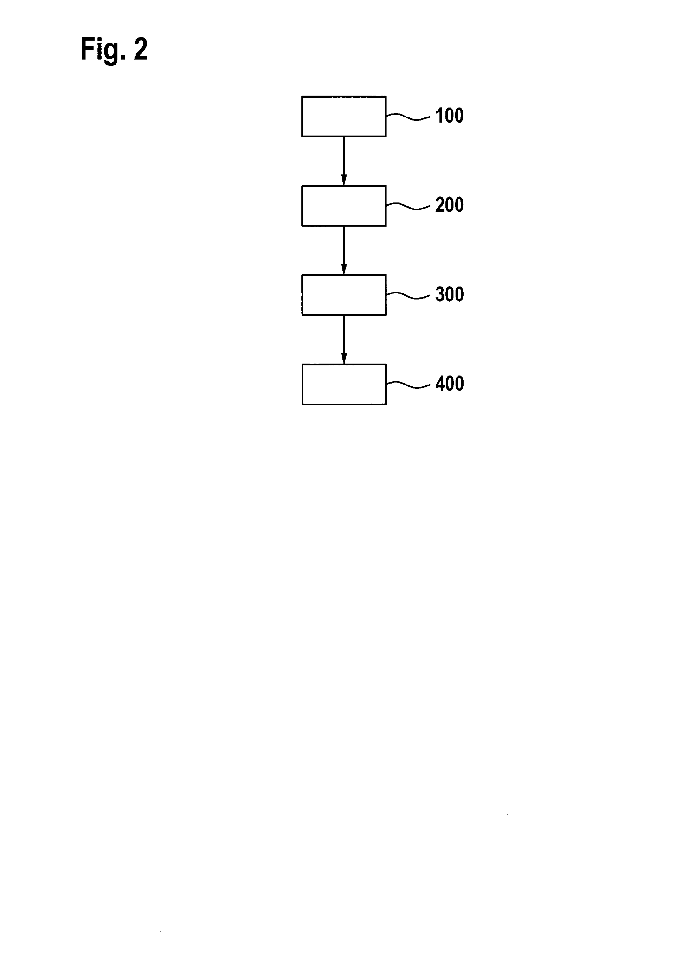

Figur 2 zeigt Schritte eines Ausführungsbeispiels eines erfindungsgemäßen Verfahrens zur Unterstützung eines Anwenders bei einer Produktdefinition mittels einer Datenverarbeitungseinrichtung. In Schritt 100 wird eine Anwendereingabe eines Anwenders konkretisierend ein Merkmal eines Werkstückes empfangen. Dies kann beispielsweise durch Anpassung einer Abmessung und/einer Position eines Merkmals auf dem Werkstück erfolgen, wie es bei CAD-Rechnern mitunter graphisch unterstützt erfolgt. In Schritt 200 wird eine das Merkmal repräsentierende Nachricht an eine Datenbank gesendet. Dies erfolgt im Beispiel unter Vermittlung eines Intranets und des Internets. Anschließend wird in Schritt 300 mindestens ein Eintrag aus der Datenbank anhand des Merkmals automatisch ausgewählt. Hierbei wird der Eintrag aus der Datenbank ausgewählt, welcher ein Höchstmaß an Übereinstimmung bezüglich des konkretisierten Merkmals aufweist. In Schritt 400 wird ein Informationen aus dem Eintrag repräsentierender Hinweis bezüglich des konkretisierten Merkmals an den Anwender ausgegeben. Auf diese Weise erhält der Anwendung proaktive Unterstützung bei der Produktdefinition im Rahmen einer Konkretisierung von Merkmalen und mit dieser in Zusammenhang stehenden Auswirkungen.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: CAD-Rechner
- 2: Winkel
- 3: Nachricht
- 4,5: Datenbank
- 6: Hinweis
- 7: Internet
- 8: Sendeempfangseinheit
- 9: Nachricht
- 10: Bildschirm
- 11: Tastatur
- 100 - 400: Verfahrensschritte
- #1 - #4: Einträge
- L2, L3, L_{K}: Ortsangabe
- K: Kategorie
- M1 - Mx: Merkmale
- T1, T2, T3: Tabelle

## Patentansprüche

1. Verfahren zur Unterstützung eines Anwenders bei einer Produktdefinition mittels einer Datenverarbeitungseinrichtung (1) umfassend die Schritte:
- Empfangen (100) einer Anwendereingabe eines Anwenders konkretisierend ein Merkmal (M1, M2, M3) eines Werkstückes (2),
- Senden (200) einer das Merkmal (M1, M2, M3) repräsentierenden Nachricht (3) an eine Datenbank (4, 5),
- automatisches Auswählen (300) mindestens eines Eintrags (#1, #2, #3, #4) aus der Datenbank (4, 5) anhand des Merkmal (M1, M2, M3), und
- Ausgeben (400) eines Informationen aus dem Eintrag (#1, #2, #3, #4) repräsentierenden Hinweises (6) bezüglich des Merkmals (M1, M2, M3) an den Anwender.

2. Verfahren nach Anspruch 1, wobei das
- Senden (200) der das Merkmal (M1, M2, M3) repräsentierenden Nachricht (3) an die Datenbank (4, 5) im Ansprechen auf das Empfangen der Anwendereingabe automatisch erfolgt.

3. Verfahren nach Anspruch 1 oder 2, wobei die Produktdefinition mittels eines computerunterstützten Zeichenprogramms erfolgt, welches auf der Datenverarbeitungseinrichtung (1) ausgeführt wird.

4. Verfahren nach einem der vorstehenden Ansprüche, wobei das Merkmal (M1, M2, M3)
- eine Kategorie (K) einer Komponente für das Werkstück (2) und/oder
- die Gestalt des Werkstückes (2) und/oder
- eine mechanische und/oder
- eine elektrische und/oder
- eine werkstofftechnische Spezifikation des Werkstückes (2)
konkretisiert.

5. Verfahren nach einem der vorstehenden Ansprüche, wobei eine Kategorie (K) für eine Komponente des Werkstückes (2) aus der Anwendereingabe abgeleitet und in der Nachricht (3) an die Datenbank (4, 5) definiert wird.

6. Verfahren nach einem der vorstehenden Ansprüche, wobei die Produktdefinition sich auf
- ein elektrisches, insbesondere elektronisches, Gerät und/oder
- eine mechanische Komponente, insbesondere eines Produktes des Maschinenbaus bezieht.

7. Verfahren nach einem der vorstehenden Ansprüche, wobei die Datenverarbeitungseinrichtung (1) über
- das Internet (7) und/oder
- ein Intranet
mit der Datenbank (4, 5) kommuniziert.

8. Verfahren nach einem der vorstehenden Ansprüche, wobei
- der Eintrag (#1, #2, #3, #4) in der Datenbank (4, 5) einen vollständig spezifizierten Artikel eindeutig kennzeichnet, welcher ein Merkmal (M1, M2, M3) mit einem vordefinierten Ähnlichkeitsmaß zum in der Nachricht (3) repräsentierten Merkmal (M1, M2, M3) des Werkstückes (2) aufweist.

9. Verfahren nach einem der vorstehenden Ansprüche, wobei der Hinweis
- fertigungstechnische Erfordernisse, und/oder
- eine Masse und/oder
- Abmessungen und/oder
- eine durchschnittliche Lebensdauer und/oder
- eine durchschnittliche Ausfallrate über der Zeit und/oder
- eine Festigkeitskenngröße und/oder
- einen mechanischen Parameter und/oder
- Inhaltsstoffe, insbesondere problematische Verbindungen, und/oder Insbesondere unter Berücksichtigung eines für das Werkstück (2) vordefinierten Konstruktionsstandortes (Lₖ),
- eine Verfügbarkeit und/oder
- eine Lieferzeit charakterisiert, und/oder
- eine Gegenüberstellung zwischen dem in der Nachricht (3) repräsentierten Merkmal (M1, M2) des Werkstückes (2) und dem Eintrag (#1, #2, #3, #4) aus der Datenbank (4, 5) charakterisiert, insbesondere quantifiziert.

10. Verfahren nach einem der vorstehenden Ansprüche, wobei der Eintrag (#1, #2, #3, #4) der Datenbank (4, 5) einen Artikel einer internetbasierten, insbesondere Endkunden adressierende, Verkaufsplattform repräsentiert.

11. Verfahren nach einem der vorstehenden Ansprüche, wobei
- der Hinweis (6) auf Basis einer Differenzbetrachtung der Merkmale (M1, M2, M3, Mx) mindestens zweier Artikel einer Datenbank (4, 5) einer Verkaufsplattform erstellt wird.

12. Verfahren nach einem der vorstehenden Ansprüche, wobei der Anwender basierend auf dem Eintrag (#1, #2, #3, #4) aus der Datenbank (4, 5) aufgefordert wird zu entscheiden, ob ein Merkmal (M1, M2, M3) des Eintrags (#1, #2, #3, #4) für das Werkstück (2) verwendet werden soll.

13. Datenverarbeitungseinrichtung zur Unterstützung eines Anwenders bei einer Produktdefinition umfassend:
- eine Anwenderschnittstelle (11), welche eingerichtet ist, eine Anwendereingabe eines Anwenders konkretisierend ein Merkmal (M1, M2, M3) eines Werkstückes (2) zu empfangen,
- eine Sendeempfangseinrichtung (8), welche eingerichtet ist,
- eine das Merkmal (M1, M2, M3) repräsentierende Nachricht (3) an eine Datenbank (4, 5) zu senden, und
- eine Nachricht (9) repräsentierend einen automatisch anhand des Merkmals (M1, M2, M3) ausgewählten Eintrag (#1, #2, #3, #4) aus der Datenbank (4, 5) zu empfangen, und
- eine Ausgabeeinheit (10), welche eingerichtet ist, einen Informationen aus dem Eintrag (#1, #2, #3, #4) repräsentierenden Hinweis (6) bezüglich des Merkmals (M1, M2, M3) an den Anwender auszugeben.

14. Datenverarbeitungseinrichtung nach Anspruch 13, welche eingerichtet ist, gemeinsam mit der Datenbank (4, 5) in einem Verfahren nach einem der vorstehenden Ansprüche verwendet zu werden.
